# NEUE EUROPÄISCHE PATENTSCHRIFT

(11) **EP 3 545 608 B2**
(45) Veröffentlichungstag und Bekanntmachung des Hinweises auf die Entscheidung über den Einspruch: **23.08.2023**
(45) Hinweis auf die Patenterteilung: 03.03.2021
(21) Anmeldenummer: 17811835.2
(22) Anmeldetag: 17.11.2017
(51) Int. Cl.: H02K 7/00, B60K 6/26, B60K 6/387, F16D 13/52, H02K 7/10, H02K 7/108, F16D 21/06, B60K 6/40, B60K 6/48, F16D 25/08, F16D 25/10

(54) **KUPPLUNGSEINRICHTUNG**
CLUTCH DEVICE
DISPOSITIF D'ACCOUPLEMENT

(30) Priorität: 24.11.2016 DE 102016223277
(43) Veröffentlichungstag der Anmeldung: 02.10.2019
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(74) Vertreter: DTS Patent- und Rechtsanwälte Schnekenbühl und Partner mbB
(86) Internationale Anmeldenummer: PCT/DE2017/100984
(87) Internationale Veröffentlichungsnummer: WO 2018/095474

(56) Entgegenhaltungen:
- EP-A1- 2 287 487
- WO-A1-2017/028850
- WO-A1-2017/028856
- WO-A1-2017/028857
- WO-A1-2017/186226
- WO-A1-2018/041443
- WO-A2-2017/028862
- DE-A1- 10 036 504
- DE-A1- 10 210 194
- DE-A1-102005 044 225
- DE-A1-102010 029 435
- DE-A1-102010 051 447
- DE-A1-102011 117 781
- DE-A1-102012 006 730
- DE-A1-102012 206 292
- DE-A1-102015 213 874
- DE-T5-112012 000 703
- FR-A1- 2 814 121
- US-A1- 2007 089 962
- US-A1- 2007 267 270

## Beschreibung

Die Erfindung betrifft eine Kupplungseinrichtung umfassend eine erste Teilkupplung umfassend einen mit dem Rotor einer Elektromaschine koppelbaren oder gekoppelten ersten Außenlamellenträger mit wenigstens zwei ersten Außenlamellen sowie einen ersten Innenlamellenträger mit wenigstens einer zwischen die beiden ersten Außenlamellen greifenden ersten Innenlamelle, sowie zumindest eine zweite Teilkupplung umfassend mehrere an dem ersten oder einem mit dem Rotor koppelbaren oder gekoppelten zweiten Außenlamellenträger vorgesehene zweite Außenlamellen und einen zweiten Innenlamellenträger mit zwischen die zweiten Außenlamellen greifenden zweiten Innenlamellen, wobei die erste und die zweite Kupplungseinrichtung innerhalb des Rotors angeordnet sind.

Eine Kupplungseinrichtung aufweisend eine erste Teilkupplung und eine zweite Teilkupplung, die über einen Außenlamellenträger mit dem Rotor einer Elektromaschine gekoppelt sind, ist aus der EP 2 287 487 A1 bekannt. Bezüglich weiteren Standes der Technik wird auf die DE 100 36 504 A1 verwiesen.

Eine solche Kupplungseinrichtung dient in bekannter Weise dazu den Antrieb einer Antriebseinrichtung, beispielsweise einer Brennkraftmaschine, mit einem Getriebe zu koppeln. Bei modernen Kraftfahrzeugen mit einem Hybridantrieb ist zusätzlich ein Elektromotor vorgesehen, der ebenfalls über eine solche Kupplungseinrichtung mit dem Getriebe gekoppelt werden kann, um einen elektrischen Fahrbetrieb zu ermöglichen. Er ist darüber hinaus aber auch mit der Brennkraftmaschine über deren Abtrieb koppelbar oder gekoppelt, um diese beispielsweise beim Starten zu unterstützen oder anzutreiben.

Um diese einzelnen Kopplungen zu realisieren umfasst eine solche Kupplungseinrichtung wenigstens zwei Teilkupplungen. Über die erste Teilkupplung ist der Rotor der Elektromaschine mit einer über eine Brennkraftmaschine oder dergleichen antreibbaren Antriebsnabe verbindbar. Dies erfolgt über einen ersten Innenlamellenträger dieser ersten Teilkupplung, der mit der Antriebsnabe verbunden oder verbindbar ist. Der Rotor selbst ist mit einem ersten Außenlamellenträger dieser ersten Teilkupplung verbunden. An diesem sind üblicherweise wenigstens zwei Außenlamellen, üblicherweise Stahllamellen angeordnet, in die eine am ersten Innenlamellenträger angeordnete Innenlamelle, üblicherweise eine Reiblamelle, mit einem Träger und beidseitigen Reibbelägen, eingreift. Über ein geeignetes Betätigungselement kann dieses aus wenigstens diesen drei Lamellen bestehende Lamellenpaket zusammengedrückt und in Reibschluss gebracht werden. Damit ist der Rotor der Elektromaschine mit der Antriebsnabe verbunden, so dass eine Rotorrotation auf die Antriebsnabe übertragen werden kann. Da diese ihrerseits mit der Brennkraftmaschine gekoppelt ist, kann hierüber die Brennkraftmaschine zum Starten angetrieben werden.

Zur Kopplung sowohl der Brennkraftmaschine als auch des Elektromotors mit dem Getriebe ist wenigstens eine zweite Teilkupplung vorgesehen, die ebenfalls einen Außenlamellenträger aufweist, an dem eine Vielzahl an zweiten Außenlamellen axial beweglich angeordnet sind. Bei diesem Außenlamellenträger kann es sich entweder um den ersten Außenlamellenträger, der mit dem Rotor der Elektromaschine gekoppelt ist, handeln, das heißt, dass die ersten und die zweiten Außenlamellen am gleichen Außenlamellenträger angeordnet sind. Alternativ kann es sich aber auch um einen separaten zweiten Außenlamellenträger handeln.

Vorgesehen ist des Weiteren ein zweiter Innenlamellenträger mit einer Vielzahl zweiter Innenlamellen, wobei auch hier beispielsweise die zweiten Außenlamellen Stahllamellen und die zweiten Innenlamellen Reiblamellen sind. Die zweiten Außen- und Innenlamellen bilden ebenfalls ein axial zusammendrückbares zweites Lamellenpaket, das über ein geeignetes Betätigungselement zusammengedrückt werden kann. Der zweite Innenlamellenträger ist mit einer mit dem Getriebe gekoppelten oder koppelbaren Antriebsnabe verbunden. Hierüber kann eine über die Brennkraftmaschine oder die Elektromaschine erwirkte Rotation des Außenlamellenträgers der zweiten Teilkupplung auf die mit dem Getriebe gekoppelte Antriebsnabe übertragen werden.

Bekannt ist die zusätzliche Integration einer dritten Teilkupplung mit einem Außen- und Innenlamellenpaket, wobei auch hier die Außenlamellen an dem gemeinsamen ersten Außenlamellenträger oder an einem separaten dritten Außenlamellenträger, der ebenfalls mit dem Rotor gekoppelt ist, angeordnet sind, während am Innenlamellenträger entsprechende Innenlamellen vorgesehen sind. Auch dieses Lamellenpaket kann über eine geeignete Betätigungseinrichtung zusammengedrückt werden. Über die zweite und dritte Teilkupplung können unterschiedliche Getriebestufengruppen in an sich bekannter Weise zugeschaltet werden. Eine solche dritte Teilkupplung ist jedoch optional.

Der Betrieb eines solchen Hybridantriebs kann auf unterschiedliche Weise erfolgen.

Im Fall eines reinen Elektroantriebs wird die Rotation des Rotors über die zweite und gegebenenfalls dritte Teilkupplung auf die Antriebsnabe und damit das Drehmoment an das Getriebe gegeben. Die erste Teilkupplung ist hierbei geöffnet, die Kopplung zur Brennkraftmaschine ist daher nicht gegeben. Über den Rotor ist folglich der Außenlamellenträger der zweiten und/oder dritten Teilkupplung anzutreiben. Handelt es sich bei diesem um den ersten Außenlamellenträger, der ohnehin mit dem Rotor verbunden ist, ist dessen Rotation zwangsläufig bei einer Rotorrotation gegeben. Weist die zweite oder dritte Teilkupplung einen separaten zweiten oder dritten Außenlamellenträger auf, so ist dieser in entsprechender Weise mit dem Rotor gekoppelt.

Soll der Antrieb über die Brennkraftmaschine erfolgen, so wird die erste Teilkupplung geschlossen, das heißt, dass die brennkraftmaschinenseitige Antriebsnabe mit dem Rotor gekoppelt ist. Aufgrund dessen Kupplung zur zweiten oder Teilkupplung kann das von der Brennkraftmaschine erzeugte Moment über die erste und zweite und/oder dritte Teilkupplung an die Antriebsnabe und damit an das Getriebe übertragen werden. In diesem Fall dreht der Rotor der hier nicht betriebenen Elektromaschine mit. Ist eine dritte Teilkupplung integriert, so wird ihm diese unabhängig von der gewählten Antriebsart im Wechsel mit der zweiten Teilkupplung zugeschaltet.

Zur Betätigung der vorgesehenen Teilkupplungen sind entsprechende Betätigungselemente vorgesehen, beispielsweise in Form von Drucktöpfen, die jeweils gegen eine axial außenliegende Außenlamelle drücken, um das jeweilige Lamellenpaket gegen einen Anschlag zu schieben und in Reibschluss zu bringen. Wird das jeweilige Lamellenpaket entlastet, so sollen sich die zusammengedrückten Lamellen voneinander trennen, man spricht von einem "Lüften" des Lamellenpakets, worüber der Reibschluss und damit der Momentenübertrag aufgehoben wird. Die jeweilige Teilkupplung ist dann geöffnet.

Um eine möglichst kompakte Kupplungseinrichtung zu realisieren, die möglichst wenig Bauraum insbesondere in Axialrichtung beansprucht, ist es bekannt, die Teilkupplungen innerhalb des Rotors anzuordnen, das heißt, dass diese axial hintereinander oder gegebenenfalls auch radial geschachtelt angeordnet sind, in jedem Fall aber innerhalb des Rotors liegen. Hierüber kann der vom Rotor umschlossene Bauraum genutzt werden.

Der Rotor selbst ist drehgelagert, wozu er in der Regel über an beiden Axialseiten vorgesehene Träger und entsprechende Lagereinrichtungen üblicherweise an gehäuseseitigen Lageraufnahmen abgestützt respektive gelagert ist. Da das Gehäuse den Elektromotor mit axialem Abstand einhaust ist es folglich erforderlich, diese Lagerstellen axial beabstandet zum Rotor vorzusehen, wobei zusätzlich gehäuseseitig entsprechende Lageraufnahmen auszubilden sind.

Der Erfindung liegt damit das Problem zugrunde, eine demgegenüber verbesserte Kupplungseinrichtung, die kompakter aufgebaut ist, anzugeben.

Zur Lösung dieses Problems ist bei einer Kupplungseinrichtung der eingangs genannten Art erfindungsgemäß vorgesehen, dass der Rotor an den Axialseiten über jeweils einen Träger an jeweils einem Gehäuse einer der Betätigung wenigstens einer Kupplungseinrichtung dienenden Betätigungseinrichtung drehgelagert ist.

Erfindungsgemäß wird der Rotor über beide seiner axialseitig vorgesehenen Träger an dem jeweiligen Gehäuse einer Betätigungseinrichtung, die zum Betätigen einer Kupplungseinrichtung dient, drehgelagert. Diese Betätigungseinrichtung, bei der es sich beispielsweise um eine hydraulische Betätigungseinrichtung in Form eines CSC (concentric slave cylinder) handelt, ist positionsfest verbaut und, da über sie ein Betätigungselement einer Teilkupplung angesteuert wird, eng benachbart zur in Axialrichtung gesehen folgenden Teilkupplung angeordnet. Erfindungsgemäß ist nun der Rotor an dem Gehäuse dieser Betätigungseinrichtung drehgelagert. Es ist also lediglich erforderlich, an diesem relativ zum Rotor radial weiter innenliegenden Gehäuse einen entsprechenden Lagerungssitz vorzusehen, an dem die Lagereinrichtung, beispielsweise ein Wälzlager, angeordnet ist. Diese Position ist axial gesehen eng benachbart zur nächstfolgenden Teilkupplung und kann je nach Gehäuseaußendurchmesser radial weiter außen oder weiter innen liegen. In jedem Fall aber ergibt sich eine weitere Kompaktierung, da der Lagerort an einem Bauteil vorgesehen ist, das ebenfalls bereits mit hohem Kompaktierungsgrad bezüglich des gegebenen Bauraums ausgelegt respektive angeordnet ist.

Der Rotor ist auch an der zweiten Axialseite über einen zweiten Träger an einem Gehäuse einer zweiten Betätigungseinrichtung, über die wenigstens eine Teilkupplung betätigbar ist, drehgelagert. Kommen also zwei separate Betätigungseinrichtungen zur Betätigung der ersten und der zweiten Teilkupplung oder, sofern eine dritte Teilkupplung vorgesehen ist, zur Betätigung der dritten Teilkupplung zum Einsatz, so ist es denkbar, den Rotor beidseits über entsprechende Träger an einem Gehäuse jeweils einer Betätigungseinrichtung, beispielsweise einem CSC oder einer elektrischen Betätigungseinrichtung, drehzulagern.

Dabei kann ein oder können beide Gehäuse axial außerhalb des Rotors angeordnet sein, wenn der innerhalb des Rotors liegende Bauraum zur Integration der Teilkupplung bereits ausgeschöpft ist, so dass in diesem Fall der jeweilige Träger außerhalb des Rotors drehgelagert ist. Denkbar ist es aber auch, dass, sofern es der Bauraum zulässt, ein oder die beiden Gehäuse axial in den Rotor hinein ragen und der Träger im Inneren des Rotors drehgelagert ist. Natürlich ist es auch denkbar, dass die jeweilige Lageranordnung, radial gesehen, zumindest teilweise in den Rotor eingreift, da auch sie natürlich eine gewisse axiale Erstreckung aufweist. Denkbar ist es darüber hinaus, dass eine Lagerstelle außerhalb und die andere, zumindest teilweise, innerhalb des Rotors angeordnet ist.

Gemäß einer zweckmäßigen Weiterbildung der Erfindung, worauf bereits eingegangen wurde, ist es auch denkbar, dass eine dritte Teilkupplung, umfassend mehrere an dem ersten, dem zweiten oder einem mit dem Rotor koppelbaren oder gekoppelten dritten Außenlamellenträger vorgesehene dritte Außenlamellen und einen dritten Innenlamellenträger mit zwischen die dritten Außenlamellen greifenden dritten Innenlamellen vorgesehen ist, die ebenfalls innerhalb des Rotors angeordnet ist. In diesem Fall wird also eine Trippelkupplung realisiert, wobei die erste Teilkupplung der Ankupplung der Brennkraftmaschine dient, während die zweite und die dritte Teilkupplung der Kopplung zu zwei separaten Getriebestufengruppen dient, was an sich bekannt ist. In jedem Fall ist auch bei Ausbildung einer dritten Teilkupplung diese im Rotorinneren integriert, so dass sich ein noch kompakterer Aufbau auch bei Realisierung von drei Teilkupplungen ergibt.

Zur Lagerung des Rotors über den oder die beiden Träger kommt ein oder kommen zwei Wälzlager zum Einsatz, umfassend einen Außen- und einen Innenring, wobei der Träger je nach Anordnung des Wälzlagers am Gehäuse entweder mit dem Außenring oder mit dem Innenring verbunden ist. Sind beide Träger an einem Gehäuse einer Betätigungseinrichtung drehgelagert, so ist es denkbar, dass der eine Träger am Außenring des einen Wälzlagers, das mit seinem Innenring außenseitig auf dem Gehäuse der ersten Betätigungseinrichtung aufsitzt, angeordnet ist, während der andere Träger am Innenring des anderen Wälzlagers, das mit seinem Außenring innenseitig in dem Gehäuse der zweiten Betätigungseinrichtung sitzt, angeordnet ist. Es ist also eine außenseitige Lagerung an der einen Seite und eine innenseitige Lagerung an der anderen Seite vorgesehen. Selbstverständlich ist es aber auch denkbar, die Träger an beiden Seiten am Außenring des dann jeweils gehäuseaußenseitig sitzenden Wälzlagers anzuordnen.

Der oder die Träger sind des Weiteren erfindungsgemäß mit dem ersten oder dem zweiten, oder gegebenenfalls dem dritten Außenlamellenträger, mit dem auch der Rotor verbunden ist, verbunden. Bevorzugt sind hierbei die Außenlamellen der ersten und der zweiten, und gegebenenfalls auch der dritten Teilkupplung an dem gemeinsamen ersten Außenlamellenträger angeordnet, mit dem auch der Rotor sowie der oder die Träger verbunden sind. Das heißt, dass nur ein gemeinsamer erster Außenlamellenträger, an dem sämtliche Außenlamellen aller Teilkupplungen angeordnet sind, vorgesehen ist, was eine weitere Kompaktierung zulässt. Der oder die Träger sind direkt an dem ersten Außenlamellenträger angeordnet, so dass sie unmittelbar benachbart zur jeweils benachbarten Teilkupplung radial nach innen sowie zum jeweiligen Lagersitz geführt werden können.

Sind drei Teilkupplungen vorgesehen, so kann die erste oder die zweite Betätigungseinrichtung zur Betätigung zweier Teilkupplungen dienen, das heißt, dass in einem Gehäuse entsprechende Betätigungsvorrichtungen vorgesehen sind, über die separat zwei Drucktöpfe, die jeweils einer Teilkupplung zugeordnet sind, bedient werden können. Ist auch der zweite Träger an einem derartigen Gehäuse gelagert, so dient diese Betätigungseinrichtung nur einer Teilkupplung. Bevorzugt kann dabei die erste Betätigungseinrichtung der Betätigung der ersten und der zweiten Kupplung und die zweite Teilkupplung der Betätigung der dritten Teilkupplung dienen.

Dabei kann bei dieser Erfindungsausgestaltung die erste Teilkupplung radial weiter innenliegen als die zweite Teilkupplung und von einem Betätigungselement, über das die zweite Teilkupplung betätigbar ist, durchgriffen sein. Das heißt, dass der Betätigung der zweiten Teilkupplung dienende Drucktopf beispielsweise die Außenlamellen der ersten Teilkupplung durchgreift. Da die Außenlamellen beider Teilkupplungen auf gleicher Drehzahl liegen, ist dies ohne weiteres möglich.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine erfindungsgemäße Kupplungseinrichtung in einer Schnittdarstellung,
- Figur 2: eine vergrößerte Teilansicht der Kupplungseinrichtung aus Fig. 1 unter Darstellung der Lagerung des Rotors an einer ersten Betätigungseinrichtung und
- Figur 3: eine vergrößerte Teilansicht der Kupplungseinrichtung aus Fig. 1 unter Darstellung der Lagerung des Rotors an einer zweiten Betätigungseinrichtung.

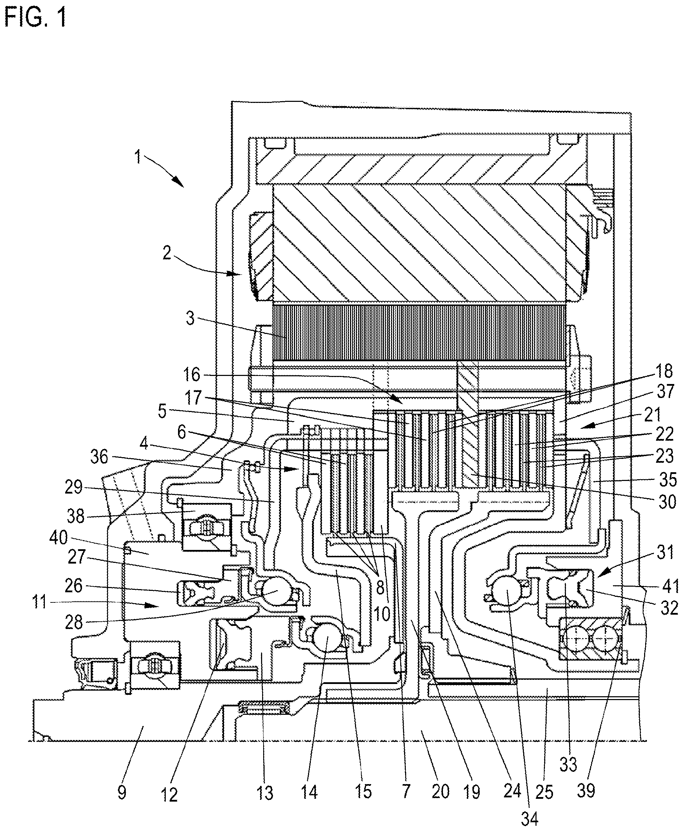

Figur 1 zeigt eine erfindungsgemäße Kupplungseinrichtung 1 mit einer zugeordneten Elektromaschine 2 mit einem Rotor 3. Vorgesehen ist eine erste Teilkupplung 4, üblicherweise auch K0-Kupplung genannt, mit einem ersten Außenlamellenträger 5, an dem mehrere erste Außenlamellen 6, beispielsweise Stahllamellen, angeordnet sind. An einem ersten Innenlamellenträger 7 sind mehrere Innenlamellen 8, in diesem Fall Reiblamellen, angeordnet. Der Außenlamellenträger 5 ist fest mit dem Rotor 3 verbunden, während der Innenlamellenträger 7 mit einer Antriebsnabe 9, die mit einer nicht näher gezeigten Brennkraftmaschine gekoppelt ist, verbunden ist.

Die ersten Außen- und Innenlamellen 6, 8 bilden ein Lamellenpaket, das, da die Außenlamellen axial beweglich am jeweiligen Außen- und Innenlamellenträger 5, 7 angeordnet sind, axial gegen ein Widerlager 10 zusammengedrückt werden kann. In diesem Fall kommt es zu einer reibschlüssigen Verbindung und damit einem Momentenübertrag vom Rotor 3 über den Außenlamellenträger 5, das Lamellenpaket sowie den Innenlamellenträger 7 auf die Antriebsnabe 9, um hierüber beispielsweise die Brennkraftmaschine zu starten. Umgekehrt kann hierüber natürlich auch ein Drehmoment der Brennkraftmaschine auf den Außenlamellenträger 5 gegeben werden, das sodann über nachgeschaltete weitere Teilkupplungen an ein Getriebe geführt werden kann.

Zur Betätigung dieses aus den Außen- und Innenlamellen 6, 8 bestehenden Lamellenpakets ist eine feste Betätigungseinrichtung 11 vorgesehen, bei der es sich um eine hydraulisch arbeitende Betätigungseinrichtung in Form eines CSC (concentric slave cylinder) handelt. In einen Druckraum 12 kann mittels eines Hydraulikfluids ein entsprechend hoher Druck aufgebaut werden, der zu einer axialen Bewegung des Zylinders 13 führt, mit dem über ein Wälzlager 14 ein ringförmiges Betätigungselement 15 in Form eines Drucktopfes gekoppelt ist. Aus dessen Axialbewegung resultiert das Zusammendrücken der Außen- und Innenlamellen 6, 8 und damit der Reibschluss für den Momentenübertrag. Bei einer Entlastung des Druckes bewegt sich das Betätigungselement 15 wieder zurück, die zusammengedrückten Lamellen trennen sich voneinander, es kommt zum sogenannten "Lüften".

Vorgesehen ist des Weiteren eine zweite Teilkupplung 16, üblicherweise auch K1-Kupplung genannt. Auch diese umfasst eine Vielzahl an Außenlamellen 17, auch hier Stahllamellen, sowie an Innenlamellen 18 in Form von Reiblamellen. Die Außenlamellen 17 sind am ersten Außenlamellenträger 5, an dem auch die Außenlamellen 6 angeordnet sind, axial beweglich aufgenommen, während die Innenlamellen 18 an einem zweiten Innenlamellenträger 19 axial beweglich angeordnet sind. Der Innenlamellenträger 19 ist mit einer mit dem Getriebe verbundenen Antriebsnabe 20 drehfest verbunden.

Über diese zweite Teilkupplung 16 kann eine ein Moment übertragende Verbindung des Außenlamellenträgers 5 und damit des Rotors 3 zur Antriebsnabe 20 und damit zu den zugeordneten Getriebestufen des Getriebes hergestellt werden, so dass eine Rotation des Rotors 3 für einen elektrischen Antrieb übertragen werden kann, gleichermaßen aber auch eine Rotation der über die Brennkraftmaschine angetriebenen Antreibsnabe 9 hierüber an das Getriebe gegeben werden kann.

Schließlich ist eine dritte Teilkupplung 21, üblicherweise K2-Kupplung genannt, vorgesehen, ebenfalls umfassend mehrere in Form von Stahllamellen ausgeführte Außenlamellen 22 sowie mehrere zwischen diese greifende, in Form von Reiblamellen ausgeführte Innenlamellen 23. Auch hier sind die Außenlamellen 22 am gemeinsamen ersten Außenlamellenträger 5 axial beweglich angeordnet, während die Innenlamellen 23 axial beweglich an einem dritten Innenlamellenträger 24 angeordnet sind, der mit einer zweiten, als Hohlwelle ausgeführten Antriebswelle 25 drehfest verbunden ist, über welche Antriebswelle 25 Getriebestufen einer zweiten Stufengruppe des Getriebes gekoppelt sind.

Auch die beiden Teilkupplungen 16 und 21 können mit ihren jeweiligen Lamellenpaketen, gebildet aus den Außen- und Innenlamellen 17, 18 respektive 22, 23, geöffnet und geschlossen werden, wozu wiederum entsprechende Betätigungsmittel vorgesehen sind. Die zweite Teilkupplung 16 kann ebenfalls über die erste Betätigungseinrichtung 11 betätigt werden. Hierzu ist ein weiterer zylindrischer Druckraum 26 vorgesehen, in dem ebenfalls ein hinreichender Druck aufgebaut werden kann, so dass ein zylindrischer Kolben 27 axial verschoben werden kann. An diesem ist über ein Wälzlager 28 ein Betätigungselement 29 auch hier in Form eines Drucktopfes angeordnet und axial bewegbar. Dieses Betätigungselement 27 durchgreift die Außenlamellen 6 der ersten Teilkupplung 4, wie in der Figur gezeigt und drückt auf die linksseitig erste Außenlamelle 17 der zweiten Teilkupplung 16, so dass diese gegen ein Widerlager 30 zusammengedrückt werden kann. Hierüber wird die zweite Teilkupplung 16 geschlossen. Bei einer Druckentlastung öffnet sie sich wieder.

Zur Betätigung der dritten Teilkupplung 21 ist eine zweite Betätigungseinrichtung 31 vorgesehen, ebenfalls umfassend einen zylindrischen Druckraum 32, in dem ein beweglicher zylindrischer Kolben 33 angeordnet ist, mit dem über ein Wälzlager 34 ein weiteres Betätigungselement 35 in Form eines Drucktopfs gekoppelt ist. Dieses greift an der rechtsseitig außenliegenden Außenlamelle 22 der dritten Teilkupplung 21 an, so dass diese axial gegen das Widerlager 30 zusammengedrückt werden kann. Bei einer Druckentlastung kommt es auch hier zu einem Lüften der dritten Teilkupplung 21.

Auch diese zweite Betätigungseinrichtung 31 ist als hydraulische Betätigungseinrichtung in Form eines CSC ausgebildet. Das heißt, dass die Betätigung aller drei Teilkupplungen 4, 16 und 21 hydraulisch über jeweils einen CSC erfolgt.

Der Rotor 3 und mit ihm der hier gemeinsam genutzte Außenlamellenträger 5 ist über zwei axialseitig vorgesehene Träger 36, 37 drehgelagert. Die beiden Träger 36, 37 erstrecken sich radial nach innen. Die Drehlagerung erfolgt über jeweils ein Wälzlager 38, 39. Erfindungsgemäß sitzen diese beiden Wälzlager 38, 39 auf dem jeweiligen Gehäuse 40, 41 der jeweiligen ersten bzw. zweiten Betätigungseinrichtung 11, 31.

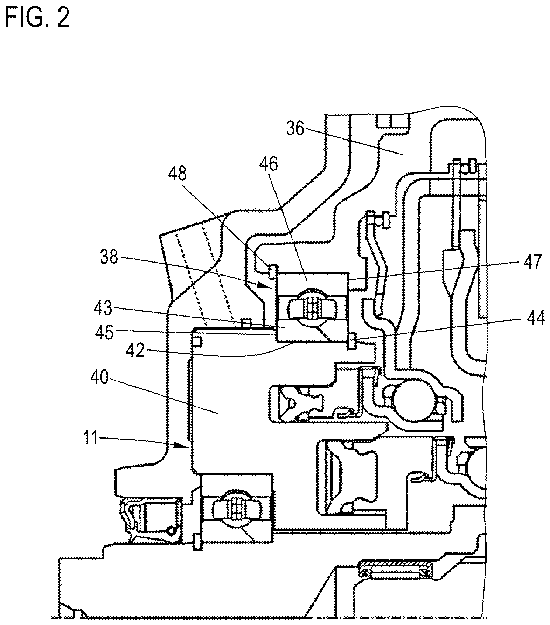

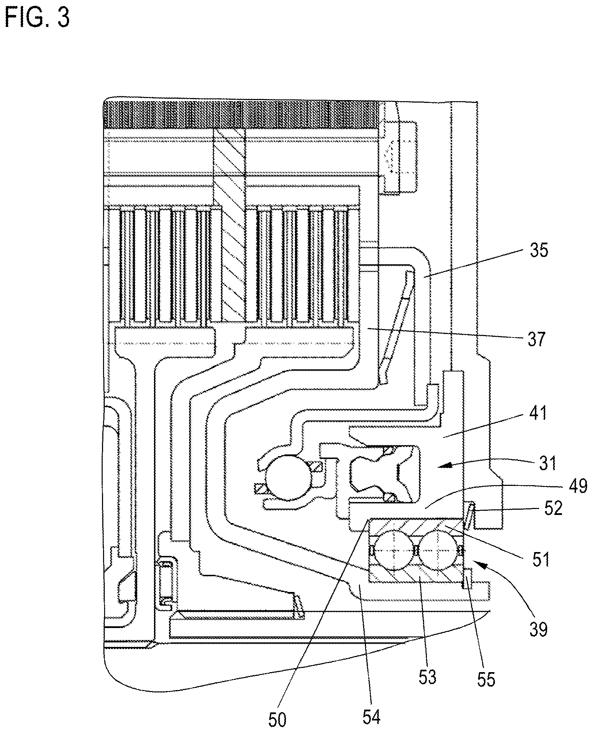

Die Figuren 2 und 3 zeigen jeweils Ausschnitte der Kupplungseinrichtung 1 aus Fig. 1 mit entsprechenden Lagerbereichen.

Wie Fig. 2 zeigt ist am Gehäuse 40 der ersten Betätigungseinrichtung 11 ein Lagersitz 42 ausgebildet, in dem der Außenring 43 des ersten Wälzlagers 38 aufgenommen und über einen Sicherungsring 44 und einen an der anderen Seite befindlichen Anschlag 45 gesichert ist. Der Träger 36 ist mit dem Außenring 46 verbunden, wozu dieser an einem Anschlag 47 anliegt und andererseits über einen Sicherungsring 48 axial gesichert ist. Hier ist also der Träger 36 an der Außenseite des Gehäuses 40 drehgelagert.

Anders die Ausgestaltung der Lagerung des Trägers 37, die in Fig. 3 gezeigt ist. Der Träger 37, der im Übrigen, siehe Fig. 3, von dem Betätigungselement 35, das zum Zusammendrücken des Lamellenpakets der zweiten Teilkupplung 21 dient, in entsprechenden Durchbrechungen durchgriffen ist, ist derart gewinkelt ausgeführt, dass er sich in den Bereich unterhalb des Gehäuses 41 der zweiten Betätigungseinrichtung 31 erstreckt. An der Innenseite des Gehäuses 41 ist ein entsprechender Lagersitz 49 ausgebildet, mit einem Anschlag 50, gegen den der Außenring 51 des Wälzlagers 39 anliegt. An der anderen Seite ist ein Sicherungsring 52 vorgesehen, der den Außenring 51 axial sichert.

Der Träger 37 selbst greift in den Innenring 53 des Wälzlagers 39 ein. Der Innenring 53 liegt an einem Anschlag 54 des Trägers 37 an, axial ist er über einen Sicherungsring 55 gesichert. Hier erfolgt also die Rotorlage gehäuseinnenseitig.

Den beiden Betätigungseinrichtungen, also den beiden CSC, kommt hier also eine Doppelfunktion zu. Zum einen dienen sie als Aktoren zum Ansteuern der einzelnen Teilkupplungen. Zum anderen dienen ihre beiden Gehäuse gleichzeitig als Aufnahmen für die Rotorlagerung. Da die CSC-Gehäuse 40, 41 radial gesehen relativ weit innen liegen, ist es aus diesem Grund möglich, die Durchmesser der Wälzlager 38, 39 zu reduzieren, im Übrigen werden keine weiteren Gehäuseabstützungen als Lageraufnahmen benötigt. Durch die Bearbeitung der CSC-Gehäuse als Konturzuglogik wird darüber hinaus sichergestellt, dass die Lager den geringstmöglichen Koaxialversatz aufweisen. Daher ist auch eine äußerst geringe Unwucht gegeben.

### Bezugszeichenliste

- 1: Kupplungseinrichtung
- 2: Elektromaschine
- 3: Rotor
- 4: Teilkupplung
- 5: Außenlamellenträger
- 6: Außenlamelle
- 7: Innenlamellenträger
- 8: Innenlamelle
- 9: Antriebsnabe
- 10: Wiederlager
- 11: Betätigungseinrichtung
- 12: Druckraum
- 13: Zylinder
- 14: Wälzlager
- 15: Betätigungselement
- 16: Teilkupplung
- 17: Außenlamelle
- 18: Innenlamelle
- 19: Innenlamellenträger
- 20: Antriebsnabe
- 21: Teilkupplung
- 22: Außenlamelle
- 23: Innenlamelle
- 24: Innenlamellenträger
- 25: Antriebswelle
- 26: Druckraum
- 27: Kolben
- 28: Wälzlager
- 29: Betätigungselement
- 30: Wiederlager
- 31: Betätigungselement
- 32: Druckraum
- 33: Kolben
- 34: Wälzlager
- 35: Betätigungselement
- 36: Träger
- 37: Träger
- 38: Wälzlager
- 39: Wälzlager
- 40: Gehäuse
- 41: Gehäuse
- 42: Lagersitz
- 43: Außenring
- 44: Sicherungsring
- 45: Anschlag
- 46: Außenring
- 47: Anschlag
- 48: Sicherungsring
- 49: Lagersitz
- 50: Anschlag
- 51: Außenring
- 52: Sicherungsring
- 53: Innenring
- 54: Anschlag
- 55: Sicherungsring

## Patentansprüche

1. Kupplungseinrichtung umfassend eine erste Teilkupplung (4) umfassend einen mit dem Rotor (3) einer Elektromaschine (2) koppelbaren oder gekoppelten ersten Außenlamellenträger (5) mit wenigstens zwei ersten Außenlamellen (6) sowie einen ersten Innenlamellenträger (7) mit wenigstens einer zwischen die beiden ersten Außenlamellen (6) greifenden ersten Innenlamelle (8), sowie zumindest eine zweite Teilkupplung (16) umfassend mehrere an dem ersten oder einem mit dem Rotor (3) koppelbaren oder gekoppelten zweiten Außenlamellenträger vorgesehene zweite Außenlamellen (17) und einen zweiten Innenlamellenträger (19) mit zwischen die zweiten Außenlamellen (17) greifenden zweiten Innenlamellen (18), wobei die erste und die zweite Kupplungseinrichtung (4, 16) innerhalb des Rotors (3) angeordnet sind, **dadurch gekennzeichnet,**
**dass** der Rotor (3) zumindest an einer Axialseite über einen Träger (36, 37) an einem Gehäuse (40, 41) einer der Betätigung wenigstens einer Kupplungseinrichtung (4, 16, 21) dienenden Betätigungseinrichtung (11, 31) drehgelagert ist, wobei der Rotor (3) auch an der zweiten Axialseite über einen zweiten Träger (36, 37) an einem Gehäuse einer zweiten Betätigungseinrichtung (11,31), über die wenigstens eine Kupplungseinrichtung (4, 16, 21) betätigbar ist, drehgelagert ist.

2. Kupplungseinrichtung nach Anspruch 1, **dadurch gekennzeichnet, dass** ein oder beide Gehäuse (40, 41) axial außerhalb des Rotors (3) angeordnet sind und der jeweilige Träger (36, 37) außerhalb des Rotors (3) drehgelagert sind, oder dass ein
oder beide Gehäuse (40, 41) axial in den Rotor (3) hineinragen und der jeweilige Träger (36, 37) im Inneren des Rotors (3) drehgelagert sind.

3. Kupplungseinrichtung nach einem der vorangehenden Ansprüche, **dadurch gekennzeichnet, dass** eine dritte Teilkupplung (21) umfassend mehrere an dem ersten, dem zweiten oder einem mit dem Rotor (3) koppelbaren oder gekoppelten dritten Außenlamellenträger vorgesehene dritte Außenlamellen (22) und einen dritten Innenlamellenträger (24) mit zwischen die dritten Außenlamellen (22) greifenden dritten Innenlamellen (23) vorgesehen ist, die ebenfalls innerhalb des Rotors (3) angeordnet ist.

4. Kupplungseinrichtung nach einem der vorangehenden Ansprüche, **dadurch gekennzeichnet, dass** der oder jeder Träger (36, 37) über ein Wälzlager (38, 39) umfassend einen Außen- und einen Innenring (45, 46, 51, 53) an dem Gehäuse (40, 41) drehgelagert und mit dem Außenring (46, 51) oder dem Innenring (45, 53) verbunden ist.

5. Kupplungseinrichtung nach Anspruch 4,**dadurch gekennzeichnet, dass** der eine Träger (36) am Außenring (46) des einen Wälzlagers (38), das mit seinem Innenring (46) außenseitig auf dem Gehäuse (40) der ersten Betätigungseinrichtung (11) aufsitzt, angeordnet ist, und dass der andere Träger (37) am Innenring (53)des anderen Wälzlagers (39), das mit seinem Außenring (51) innenseitig in dem Gehäuse (41) der zweiten Betätigungseinrichtung (31) sitzt, angeordnet ist.

6. Kupplungseinrichtung nach einem der vorangehenden Ansprüche, **dadurch gekennzeichnet, dass** der oder die Träger (36, 37) mit dem ersten oder dem zweiten, oder gegebenenfalls dem dritten Außenlamellenträger (5), mit dem auch der Rotor (3) verbunden ist, verbunden ist.

7. Kupplungseinrichtung nach Anspruch 6,**dadurch gekennzeichnet, dass** die Außenlamellen (6, 17, 22) der ersten und der zweiten, und gegebenenfalls auch der dritten Teilkupplung (4, 16, 21) an dem gemeinsamen ersten Außenlamellenträger (5) angeordnet sind, mit dem auch der Rotor (3) sowie der oder die Träger (36, 37) verbunden sind.

8. Kupplungseinrichtung nach einem der vorangehenden Ansprüche, **dadurch gekennzeichnet, dass** die erste oder die zweite Betätigungseinrichtung (11, 31) zur Betätigung zweier Teilkupplungen (4,16,21) dient.

9. Kupplungseinrichtung nach Anspruch 8, **dadurch gekennzeichnet, dass** die erste Betätigungseinrichtung (11) der Betätigung der ersten und der zweiten Kupplungseinrichtungen (4, 16) und die zweite Betätigungseinrichtung (31) der Betätigung der dritten Teilkupplung (21) dient.

## Claims

1. Clutch device comprising a first sub-clutch (4) comprising a first outer plate carrier (5), which can be coupled or is coupled to the rotor (3) of an electric machine (2), having at least two first outer plates (6) and a first inner plate carrier (7) having at least one first inner plate (8) engaging between the two first outer plates (6), as well as at least one second sub-clutch (16) comprising a plurality of second outer plates (17) which are provided on the first outer plate carrier or a second outer plate carrier which can be coupled or is coupled to the rotor (3), and a second inner plate carrier (19) having second inner plates (18) engaging between the second outer plates (17), wherein the first and the second clutch device (4, 16) are arranged within the rotor (3), **characterized in that**
the rotor (3) is rotatably mounted at least on an axial side via a carrier (36, 37) on a housing (40, 41) of an actuation device (11, 31) used to actuate at least one clutch device (4, 16, 21), wherein the rotor (3) is also rotatably mounted on the second axial side via a second carrier (36, 37) on a housing of a second actuation device (11, 31), via which at least one clutch device (4, 16, 21) can be actuated.

2. Clutch device according to claim 1, **characterized in that** one or both housings (40, 41) are arranged axially outside the rotor (3), and the respective carriers (36, 37) are rotatably mounted outside the rotor (3), or **in that** one or both housings (40, 41) protrude axially into the rotor (3) and the respective carriers (36, 37) are rotatably mounted in the interior of the rotor (3).

3. Clutch device according to one of the preceding claims, **characterized in that** a third sub-clutch (21) comprising a plurality of third outer plates (22) provided on the first outer plate carrier, the second outer plate carrier or a third outer plate carrier which can be coupled or is coupled to the rotor (3) and a third inner plate carrier (24) having third inner plates (23) engaging between the third outer plates (22) is provided, which is also arranged within the rotor (3).

4. Clutch device according to one of the preceding claims, **characterized in that** the or each carrier (36, 37) is rotatably mounted on the housing (40, 41) via a rolling bearing (38, 39) comprising an outer and an inner ring (45, 46, 51, 53) and is connected to the outer ring (46, 51) or the inner ring (45, 53).

5. Clutch device according to claim 4, **characterized in that** the one carrier (36) is arranged on the outer ring (46) of the one rolling bearing (38) which sits with the inner ring (46) thereof on the outside of the housing (40) of the first actuation device (11), and **in that** the other carrier (37) is arranged on the inner ring (53) of the other rolling bearing (39) which sits with the outer ring (51) thereof on the inside in the housing (41) of the second actuation device (31).

6. Clutch device according to one of the preceding claims, **characterized in that** the carrier(s) (36, 37) is/are connected to the first or the second or optionally the third outer plate carrier (5), to which the rotor (3) is also connected.

7. Clutch device according to claim 6, **characterized in that** the outer plates (6, 17, 22) of the first and the second and optionally also the third sub-clutch (4, 16, 21) are arranged on the common first outer plate carrier (5), to which the rotor (3) and the carrier(s) (36, 37) are also connected.

8. Clutch device according to one of the preceding claims, **characterized in that** the first or the second actuation device (11, 31) is used to actuate two sub-clutches (4, 16, 21).

9. Clutch device according to claim 8, **characterized in that** the first actuation device (11) is used to actuate the first and the second clutch devices (4, 16) and the second actuation device (31) is used to actuate the third sub-clutch (21).

## Revendications

1. Dispositif d'accouplement comprenant un premier accouplement partiel (4) comprenant un premier support de lamelles extérieures (5) couplé ou pouvant être couplé au rotor (3) d'une machine électrique (2), avec au moins deux premières lamelles extérieures (6) ainsi qu'un premier support de lamelles intérieures (7) avec au moins une première lamelle intérieure (8) s'imbriquant entre les deux premières lamelles extérieures (6), au moins un deuxième accouplement partiel (16) comprenant plusieurs deuxièmes lamelles extérieures (17) prévues au niveau du premier ou d'un deuxième support de lamelles extérieures couplé ou pouvant être couplé au rotor (3) et un deuxième support de lamelles intérieures (19) avec des deuxièmes lamelles intérieures (18) s'imbriquant entre les deuxièmes lamelles extérieures (17), dans lequel le premier et le deuxième dispositif d'accouplement (4, 16) sont disposés à l'intérieur du rotor (3), **caractérisé en ce que** le rotor (3) est disposé de façon tournante au moins au niveau d'un côté axial via un support (36, 37) prévu au niveau d'un carter (40, 41) d'un dispositif d'actionnement (11, 31) servant d'actionnement d'au moins un dispositif d'accouplement (4, 16, 21), dans lequel le rotor (3) est également actionnable au niveau du deuxième côté axial via un deuxième support (36, 37) prévu au niveau d'un carter d'un deuxième dispositif d'actionnement (11,31), via l'au moins un dispositif d'accouplement (4, 16, 21).

2. Dispositif d'accouplement selon la revendication 1, **caractérisé en ce qu'**un carter (40, 41) ou les deux sont disposés à l'extérieur du rotor (3) dans le plan axial et que le support respectif (36, 37) est disposé de façon à pouvoir tourner à l'extérieur du rotor (3) et qu'un ou les deux carters (40, 41) rentrent dans le rotor (3) dans le plan axial et que le support respectif (36, 37) est disposé de façon à pouvoir tourner à l'intérieur du rotor (3).

3. Dispositif d'accouplement selon l'une quelconque des revendications précédentes, **caractérisé en ce qu'**un troisième accouplement partiel (21) comprenant plusieurs troisièmes lamelles extérieures (22) prévues au niveau du premier, du deuxième ou d'un troisième support de lamelles extérieures couplé ou pouvant être couplé au rotor (3) et qu'un troisième support de lamelles intérieures (24) est prévu avec des troisièmes lamelles intérieures (23) également disposées à l'intérieur du rotor (3) et s'imbriquant entre les troisième lamelles extérieures (22).

4. Dispositif d'accouplement selon l'une quelconque des revendications précédentes, **caractérisé en ce que** le ou les supports (36, 37) sont disposées de façon à pouvoir tourner au niveau du carter (40, 41) via un rouleau (38, 39) comprenant une bague extérieure et une bague intérieure (45, 46, 51, 53) et relié à la bague extérieure (46, 51) ou à la bague intérieure (45, 53).

5. Dispositif d'accouplement selon la revendication 4, **caractérisé en ce que** le premier support (36) est disposé sur la bague extérieure (46) du premier rouleau (38) reposant avec sa bague intérieure (46) sur le côté extérieur sur le carter (40) du premier dispositif d'actionnement (11) et que l'autre support (37) est disposé au niveau de la bague intérieure (53) de l'autre rouleau (39) reposant avec sa bague extérieure (51) sur le côté intérieur dans le carter (41) du deuxième dispositif d'actionnement (31).

6. Dispositif d'accouplement selon l'une quelconque des revendications précédentes, **caractérisé en ce que** le ou les supports (36, 37) sont reliés au premier ou au deuxième ou le cas échéant au troisième support de lamelles extérieures (5) avec lequel le rotor (3) est également relié.

7. Dispositif d'accouplement selon la revendication 6, **caractérisé en ce que** les lamelles extérieures (6, 17, 22) du premier et du deuxième, et le cas échéant également du troisième accouplement partiel (4, 16, 21) sont reliés au premier support de lamelles extérieures (5) commun avec lequel le rotor (3) ainsi que le ou les supports (36, 37) sont également reliés.

8. Dispositif d'accouplement selon l'une quelconque des revendications précédentes, **caractérisé en ce que** le premier ou le deuxième dispositif d'actionnement (11, 31) sert à l'actionnement des deux accouplements partiels (4, 16, 21).

9. Dispositif d'accouplement selon la revendication 8, **caractérisé en ce que** le premier dispositif d'actionnement (11) sert à l'actionnement des premier et deuxième dispositifs d'accouplement (4, 16) et que le deuxième dispositif d'actionnement (31) sert à l'actionnement du troisième accouplement partiel (21).
